# EUROPEAN PATENT APPLICATION

(11) **EP 4 607 602 A1**
(43) Date of publication of application: **27.08.2025**
(21) Application number: 23879929.0
(22) Date of filing: 23.06.2023
(51) Int. Cl.: H01M 4/131, H01M 4/62, H01M 10/42, H01M 10/0562, H01M 10/052, H01M 4/133, H01M 4/02

(54) **POSITIVE ELECTRODE FOR ALL SOLID-STATE BATTERY AND ALL SOLID-STATE BATTERY INCLUDING SAME**

(30) Priority: 19.10.2022 KR 20220135249
(71) Applicant: SAMSUNG SDI CO., LTD., Yongin-si, Gyeonggi-do 17084 (KR)
(72) Inventor: JUNG, Mijung, Yongin-si, Gyeonggi-do 17084 (KR); AN, Seonhyeok, Yongin-si, Gyeonggi-do 17084 (KR); OH, Seunghyun, Yongin-si, Gyeonggi-do 17084 (KR)
(74) Representative: Gulde & Partner
(86) International application number: PCT/KR2023/008792
(87) International publication number: WO 2024/085344

(57) **Abstract**

The present invention relates to a positive electrode for an all-solid-state battery, and the positive electrode for an all-solid-state battery comprises a positive electrode layer including a positive electrode active material, a sulfide-based solid electrolyte, a positive electrolyte layer including a plasticizer and a lithium salt that is a solid at room temperature and liquid at 60 °C or higher, and a current collector supporting the positive electrode layer.

## Description

### TECHNICAL FIELD

A positive electrode for an all-solid-state battery and an all-solid-state battery including the same are disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid electrolyte. These all-solid-state batteries have excellent safety as there is no risk of electrolyte leakage, and they have the advantage of being easy to fabricate thin batteries.

In order to improve ionic conductivity and high-rate capability of lithium ion batteries, methods have been attempted to add lithium salts to electrodes or electrolytes, but it is difficult to attempt methods to add lithium salts to electrodes or electrolytes in all-solid-state batteries. This is because lithium salts do not dissolve in non-polar or low-polar solvents used in manufacturing electrodes or solid electrolytes of all-solid-state batteries.

### DETAILED DESCRIPTION OF THE INVENTION

### TECHNICAL PROBLEM

An embodiment provides a positive electrode for an all-solid-state battery exhibiting excellent electrochemical properties.

Another embodiment provides an all-solid-state battery including the positive electrode.

### TECHNICAL SOLUTION

An embodiment provides a positive electrode for an all-solid-state battery, including: a positive electrode layer including a positive electrode active material; a sulfide-based solid electrolyte; a plasticizer that is solid at room temperature and liquid at 60 °C or higher; and a lithium salt; and a current collector supporting the positive electrode layer.

The lithium salt may be solvated and present inside the plasticizer.

The plasticizers may be succinonitrile, ethylene carbonate, cyclic phosphate. polycaprolactone, polyethylene glycol (or polyethylene oxide), polytetrahydrofuran, or poly(tetramethylene ether glycol), or a combination thereof.

An amount of the plasticizer may be 0.05 wt% to 5 wt% based on 100 wt% of the total positive electrode layer.

The lithium salt may be lithium bis(trifluoro methanesulfonyl)imide (LiTFSI, LiN(SO₂CF₃)₂), LiCl, LiBr, LiClO₄, LiBF₄, LiB₁₀Cl₁₀, LiFP₆, LiAsF₆, LiSbF₆, LiAlCl4, LiSCN, LiN(CN)₂, Li(CF₃SO₂)₃C, LiC₄F₉SO₃, LiN(SO₂CF₂CF₃)₂, LiF, Lil, LiB(C₂O₄)₂, LiBF₃(C₂F₅), lithium bis(oxalato) borate (LiBOB), lithium oxalyldifluoroborate (LiODFB), lithium difluoro(oxalato)borate (LiDFOB), lithium bis(fluorosulfonyl)imide (LiFSI, LiN(SO₂F)₂), LiCF₃SO₃, or a mixture thereof.

An amount of the lithium salt may be 0.01 wt% to 5 wt% based on 100 wt% of the total positive electrode layer.

The sulfide-based solid electrolyte may be an argyrodite-type sulfide-based solid electrolyte.

Another embodiment provides an all-solid-state battery including the positive electrode; a negative electrode; and a solid electrolyte layer between the positive electrode and the negative electrode.

The negative electrode includes a current collector and a negative electrode layer on the current collector. The negative electrode layer may include lithium metal.

The negative electrode layer may include amorphous carbon and a metal, and the negative electrode may further include a lithium deposition layer after charging.

### ADVANTAGEOUS EFFECTS

The positive electrode for an all-solid-state battery according to an embodiment may provide an all-solid-state battery with improved ionic conductivity and high-rate capability.

### BRIEF DESCRIPTION OF THE DRAWINGS

FIG. 1 is a schematic view schematically showing the charge/discharge state of an all-solid-state battery according to an embodiment.
FIG. 2 is a schematic cross-sectional view showing the state of an all-solid-state battery after charging according to an embodiment.

### BEST MODE FOR PERFORMING INVENTION

Hereinafter, embodiments of the present invention will be described in detail. However, these embodiments are merely examples, the present invention is not limited thereto, and the present invention is defined by the scope of claims.

As used herein, when specific definition is not otherwise provided, it will be understood that when an element such as a layer, film, region, or substrate is referred to as being "on" another element, it may be directly on the other element or intervening elements may also be present.

In the present invention, "particle size" or "particle diameter" may be an average particle size. Additionally, the average particle size may be defined as the average particle size (D50) based on 50% of the cumulative volume in the cumulative size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows, and the particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60 W, and an average particle diameter (D50) in 50% reference of the particle size distribution in a measuring apparatus may be calculated.

A positive electrode for an all-solid-state battery according to an embodiment includes a positive electrode layer and a current collector supporting the positive electrode layer, wherein the positive electrode layer includes a sulfide-based solid electrolyte plasticizer and a lithium salt.

In an embodiment, the plasticizer is solid at room temperature and liquid at 60 °C or higher. In an embodiment, "liquid at 60 °C or higher" means if the reference pressure is 1 atmosphere (atm). Because a material whose state changes depending on temperature is used as a plasticizer, and in particular, a material that is solid at room temperature and liquid at 60 °C or higher is used, reaction with a solid electrolyte may be suppressed at room temperature, and lithium salts may be easily dissolved at high temperatures. Accordingly, under conditions where the temperature rises, such as during compressing and drying processes, the plasticizer may be liquefied and sufficiently filled into the pores that may exist in the positive electrode layer, and if the battery temperature is lowered back to room temperature, the plasticizer is converted back into a solid, particularly a soft, glassy solid, to further promote the movement of lithium ions, thereby maintaining the properties of the positive electrode well.

If a material that does not change state depending on temperature, for example a material that exists as a liquid at both room temperature and high temperature, is used as a plasticizer, it may react with the solid electrolyte, which may deteriorate the properties of the electrolyte and also reduce the properties of the positive electrode.

Additionally, the plasticizer according to an embodiment may have a property capable of dissolving a lithium salt.

Accordingly, if a plasticizer and a lithium salt are mixed at a temperature of 60 °C or higher at which the plasticizer liquefies, the lithium salt may be solvated and exist inside the plasticizer. To explain this in more detail, if a plasticizer and a lithium salt are mixed at a temperature of 60 °C or higher, the plasticizer exists inside a liquid state, and if the lithium salt is dissolved in the plasticizer to form a mixed solution, the lithium salt is dissolved and exists inside the plasticizer in a solvated state.

Therefore, in an embodiment, the lithium salt in the positive electrode may be solvated and present inside the plasticizer.

A positive electrode for an all-solid-state battery according to an embodiment includes a lithium salt, and thus may exhibit ionic conductivity and improved high-rate capability. Because the positive electrode for an all-solid-state battery usually uses a non-polar or low-polar solvent in the manufacturing process, if a lithium salt having low solubility in the solvent is used in the manufacturing of the positive electrode, it is difficult to improve the ionic conductivity because the lithium salt is not solvated. In addition, if using a polar solvent capable of dissolving lithium salts during the manufacture of the positive electrode, there is a problem of reacting with the solid electrolyte and causing deterioration of the solid electrolyte.

On the other hand, the positive electrode according to an embodiment may solve this problem by using a lithium salt together with a plasticizer that may exist as a solid at room temperature and as a liquid at high temperatures, especially as a polar solvent. Because the plasticizer becomes a polar solvent at high temperatures, the lithium salt may be dissolved in the plasticizer, that is, the lithium salt may be solvated and exist inside the plasticizer, thereby improving ionic conductivity. In addition, because the lithium cation formed by dissolving the lithium salt may capture the partial negative charge existing in the plasticizer, even if the plasticizer comes into contact with the electrolyte, there is no site to react with the electrolyte, and thus no reaction occurs with the solid electrolyte, and there is no problem due to the reaction between the plasticizer and the solid electrolyte.

In addition, the plasticizer may be liquefied under conditions where the temperature rises, such as during the compressing and drying processes, during the positive electrode manufacturing process, so that it may sufficiently fill the pores that may exist in the positive electrode layer, and thus the lithium salt present inside the plasticizer may be solvated and exist very uniformly and densely in the positive electrode layer, thereby improving ionic conductivity.

The plasticizer may be succinonitrile, ethylene carbonate, polycaprolactone, polyethylene glycol (or polyethylene oxide), polytetrahydrofuran (or polytetramethylene ether glycol), or a combination thereof. The plasticizer does not react with a sulfide-based solid electrolyte, so that the solid electrolyte does not decompose or deteriorate, and there is no problem of battery performance deterioration due to this.

The lithium salt may be lithium bis(trifluoromethanesulfonyl)imide (LiTFSI, LiN(SO₂CF₃)₂), LiCl, LiBr, LiClO₄, LiBF₄, LiB10Cl₁₀, LiFP₆, LiAsF₆, LiSbF₆, LiAlCl4, LiSCN, LiN(CN)₂, Li(CF₃SO₂)₃C, LiC₄F₉SO₃, LiN(SO₂CF₂CF₃)₂, LiF, Lil, LiB(C₂O₄)₂, LiBF₃(C₂F₅), lithium bis(oxalato)borate (LiBOB), lithium oxalyldifluoroborate (LiODFB), lithium difluoro(oxalato)borate (LiDFOB), lithium bis(fluorosulfonyl)imide (LiFSI, LiN(SO₂F)₂), LiCF₃SO₃, or a combination thereof.

In an embodiment, an amount of the plasticizer may be 0.01 wt% to 5 wt%, 0.05 wt% to 5 wt%, 0.1 wt% to 2 wt%, or 0.1 wt% to 1 wt% based on 100 wt% of the total positive electrode layer. If the amount of the plasticizer is within the above range, the ionic conductivity may be further improved while maintaining the physical properties and energy density of the positive electrode.

An amount of the lithium salt may be 0.01 wt% to 5 wt%, 0.05 wt% to 4 wt%, 0.05 wt% to 2 wt%, or 0.1 wt% to 1 wt% based on 100 wt% of the total positive electrode layer. If the amount of lithium salt is within the above range, the ionic conductivity may be further improved while maintaining the physical properties and energy density of the positive electrode. In addition, if the amount of the lithium salt is within the above range, a balance between the plasticizer and the lithium salt may be better maintained, so that the properties of the plasticizer, which exists as a solid at room temperature and a liquid at high temperature, may be better maintained.

The positive electrode active material may be a positive electrode active material capable of reversibly intercalating and deintercalating lithium ions. For example, the positive electrode active material may be, for example, at least one of a composite oxide of lithium and a metal selected from cobalt, manganese, nickel, and a combination thereof. Examples of the positive electrode active material may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B'_{c}D'_{α} (0.90≤a≤1.8, 0≤b≤0.5, 0≤c≤0.5, 0 <α≤2); LiₐNi_{1-b-c}Co_{b}B¹_{c}O_{2-α}F¹_{α} (0.90≤a≤1.8, 0 ≤b≤0.5, 0≤c≤0.5, 0<α<2); LiₐNi_{1-b-c}Co_{b}B'_{c}O_{2-α}F¹2 (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0 ≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂ QS₂ LiQS₂ V₂O₅ LiV₂O₅ LiL¹O₂ LiNiVO₄ Li_{(3-f)}J₂(PO₄)₃ (0≤f≤2); Li_{(3-f)}Fe₂(PO₄)₃ (0≤f≤2); or LiFePO₄.

In the above chemical formulas, A is Ni, Co, Mn, or a combination thereof; B¹ is Al, Ni, Co, Mn, Cr, Fe, Mg, Sr, V, a rare-earth element, or a combination thereof; D' is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail since it is well-known in the related field.

In addition, as the coating layer, any known coating layer for the positive electrode active material of an all-solid-state battery may be applied, examples of which include Li₂O-ZrO₂ (LZO).

Here, examples of the shape of the positive electrode active material include particle shapes such as spheres and ellipsoids. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

In an embodiment, the positive electrode active material may be included in an amount of 55 wt% to 99.7 wt%, for example, 74 wt% to 89.8 wt%, based on the total weight of the positive electrode layer. If included in the above range, the capacity of the all-solid-state battery may be maximized while improving cycle-life characteristics.

The sulfide-based solid electrolyte may be a sulfide-based solid electrolyte having excellent ionic conductivity. In a case where the solid electrolyte included in the positive electrode according to an embodiment is not a sulfide-based solid electrolyte but an oxide-based solid electrolyte, a high-temperature sintering process of 700 °C or higher is performed during the manufacture of the positive electrode, and at this time, the plasticizer according to an embodiment is vaporized or decomposed, so that the effect resulting from the use of the plasticizer may not be obtained.

The sulfide-based solid electrolyte may be for example Li₂S-P₂S₅, Li₂S-P₂S₅-LiX (wherein X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are integers of 0 or more and 12 or less and Z is one of Ge, Zn, or Ga), Li₂S-GeS₂, Li₂S-SiS₂-Li₃PO₄, Li₂S-SiS₂-LiₚMO_{q} (wherein p and q are each 0 or more and 12 or less and M is one of P, Si, Ge, B, Al, Ga, or In), LiₐM_{b}P_{c}S_{d}Aₑ (wherein a, b, c, d, and e are each 0 or more and 12 or less, M is Ge, Sn, Si, or a combination thereof, and A is one of F, Cl, Br, or I). For example, it may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). In addition, specifically, it may be Li₃PS₄, Li₇P₃S₁₁, Li₇PS₆, Li₆PS₅Cl, Li₆PS₅Cl, Li₆PS₅Br, Li_{5.8}PS_{4.8}Cl_{1.2}, Li_{6.2}PS_{5.2}Br_{0.8}, and the like.

The sulfide-based solid electrolyte may be obtained by, for example, mixing Li₂S and P₂S₅ in a molar ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. Mixing methods may include mechanical milling, quenching, or solution method. Additionally, additional heat treatment may be performed after mixing. If additional firing is performed, the crystals of the solid electrolyte may become more robust.

For example, the solid electrolyte may be an argyrodite-type sulfide-based solid electrolyte. The sulfide-based solid electrolyte may be, for example, LiₐM_{b}P_{c}S_{d}Aₑ (wherein a, b, c, d, and e are all 0 or more and 12 or less, M is Ge, Sn, Si, or a combination thereof, and A is one of F, Cl, Br, or I), and specifically, may be Li₃PS₄, Li₇P₃S₁₁, Li₆PS₅Cl, Li₆PS₅Br, Li₆PS₅I, and the like. The sulfide-based solid electrolyte has high ionic conductivity close to the ionic conductivity of general liquid electrolytes at room temperature, which is in the range of 10⁻⁴ S/cm to 10⁻² S/cm, and thus may form a close bond between the positive electrode active material and the solid electrolyte without causing a decrease in ionic conductivity, and further, may form a close interface between the positive electrode layer and the solid electrolyte layer. All-solid-state batteries including the same may have improved battery performances such as rate characteristics, coulombic efficiency, and cycle-life characteristics.

The sulfide-based solid electrolyte may be amorphous or crystalline, or may be a mixture of the two.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. The solid electrolyte may effectively penetrate between the positive electrode active materials, and have excellent contact with the positive electrode active materials and connectivity between the solid electrolyte particles.

The solid electrolyte may be included in an amount of 0.1 wt% to 35 wt%, for example, 1 wt% to 35 wt%, 5 wt% to 30 wt%, 8 wt% to 25 wt%, or 10 wt% to 20 wt% based on the total weight of the positive electrode layer. If the solid electrolyte is included in the positive electrode layer in such an amount, the efficiency and cycle-life characteristics of the all-solid-state battery may be improved without reducing the capacity.

The positive electrode layer may further include a conductive material. The conductive material is used to provide conductivity to the electrode, and any material that does not cause chemical change and is electronically conductive may be used. The conductive material may include, for example, a carbon-based material such as natural graphite, artificial graphite, carbon black, acetylene black, ketjen black, a carbon fiber, a carbon nanofiber, or a carbon nanotube; a metal-based material including copper, nickel, aluminum, or silver in the form of metal powder or metal fiber; a conductive polymer such as a polyphenylene derivative; or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode layer. Within the above amount range, the conductive material may improve electrical conductivity without deteriorating battery performance.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode for an all-solid-state battery according to an embodiment may be manufactured by the following process.

The plasticizer and the lithium salt are mixed at a temperature of 60 °C or higher at which the plasticizer may be liquefied, for example, at a temperature of 60 °C to 80 °C. In the mixing process, because the plasticizer is liquefied, the lithium salt is dissolved in the plasticizer and exists inside the solvated plasticizer.

The obtained mixture is mixed in a binder and a solvent at a temperature of 60 °C or higher, for example, 60 °C to 80 °C, and then cooled. The cooling process may be carried out at room temperature, for example, 20 °C to 25 °C.

The solvent may be octyl acetate, isobutyl isobutyrate, xylene, or a combination thereof.

The binder may include polyvinylidene fluoride, polyvinyl alcohol, carboxymethyl cellulose, hydroxypropyl cellulose, diacetyl cellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, vinylidene fluoride-hexafluoropropylene copolymer, polyethylene, polypropylene, a styrene butadiene rubber, an acrylated styrene butadiene rubber, polyacrylonitrile, an epoxy resin, nylon, poly(meth)acrylate, polymethyl(meth)acrylate, and the like, but is not limited thereto. In an embodiment, the binder may be at least one selected from polyvinylidene fluoride, vinylidene fluoride-hexafluoropropylene copolymer, polytetrafluoroethylene, a styrene butadiene rubber, polyacrylonitrile, and polymethyl(meth)acrylate.

At room temperature, for example, 20 °C to 25 °C, the obtained mixture, positive electrode active material, and solid electrolyte are mixed to prepare a positive electrode layer composition. During the mixing process, a solvent may be additionally used to control viscosity, etc. The solvent may be the same as the solvent used above. In the above process, the conductive material may be further mixed. The above-mentioned positive electrode layer composition may also be expressed as a composition for forming a positive electrode layer.

The above-mentioned positive electrode layer composition is coated on a current collector, dried, and compressed to manufacture a positive electrode. The drying and compressing process may be performed at a temperature of 80 °C or higher, for example, 80 °C to 130 °C, in which case the plasticizer included in the positive electrode layer is dissolved, so that the lithium salt ionically bonded with the plasticizer may be uniformly distributed throughout the positive electrode layer.

In the manufacturing process, a mixing ratio of the materials used may be appropriately adjusted so that the amounts of the plasticizer, lithium salt, positive electrode active material, binder, and conductive material included in the final positive electrode layer are within the above-described range.

An all-solid-state battery according to an embodiment includes a positive electrode, a negative electrode, and a solid electrolyte layer between the positive electrode and the negative electrode. The all-solid-state battery may also be expressed as an all-solid-state rechargeable battery, or an all-solid-state rechargeable lithium battery.

The negative electrode includes a current collector and a negative electrode layer on one surface of the current collector.

The negative electrode layer may be a negative electrode active material layer or a negative electrode catalyst layer. Alternatively, the negative electrode layer may be a lithium metal layer.

The negative electrode active material layer includes a negative electrode active material and may further include a binder, a conductive material, and/or a solid electrolyte.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be unspecified-shaped, sheet-shaped, flake-shaped, spherical-shaped, or fiber shaped natural graphite or artificial graphite, and the amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may be silicon, a silicon-carbon composite, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative electrode active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn) and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer on the surface of the core. The crystalline carbon may be artificial graphite, natural graphite, or a combination thereof. The above amorphous carbon precursor may be coal-based pitch, mesophase pitch, petroleum-based pitch, coal-based oil, petroleum-based heavy oil, or a polymer resin such as a phenol resin, a furan resin, or a polyimide resin. In this case, the amount of silicon may be 10 wt% to 50 wt% based on the total weight of the silicon-carbon composite. Additionally, an amount of the crystalline carbon may be 10 wt% to 70 wt% based on a total weight of the silicon-carbon composite, and an amount of the amorphous carbon may be 20 wt% to 40 wt% based on a total weight of the silicon-carbon composite. Additionally, the thickness of the amorphous carbon coating layer may be 5 nm to 100 nm.

The average particle diameter (D50) of the silicon particles may be 10 nm to 20 µm, for example, 10 nm to 500 nm. The silicon particles may exist in an oxidized form, and in this case, an atomic amount ratio of Si:O in the silicon particles indicating a degree of oxidation may be a weight ratio of 99:1 to 33:67. The silicon particles may be SiOₓ particles, wherein the range of x in SiOₓ may be greater than 0 and less than 2. Here, the average particle diameter (D50) is measured by a particle size analyzer using laser diffraction and means the diameter of particles with a cumulative 50 volume% in the particle size distribution.

The Si-based negative electrode active material or Sn-based negative electrode active material may be mixed with the carbon-based negative electrode active material. If the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on a total weight of the negative electrode active material layer.

In an embodiment, the negative electrode active material layer further includes the binder and optionally may further include the conductive material. An amount of the binder in the negative electrode active material layer may be 1 wt% to 5 wt% based on a total weight of the negative electrode active material layer. In addition, if a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may include a water-insoluble binder, a water-soluble binder or a combination thereof.

The water-insoluble binder may include, for example, polyvinylchloride, carboxylated polyvinylchloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If a water-soluble binder is used as the above negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, an alkali metal salt thereof, or a combination thereof. The alkali metal may be Na, K, or Li. An amount of such thickener used may be 0.1 parts by weight to 3 parts by weight based on 100 parts by weight of the negative electrode active material. The cellulose-based compound may also act as a binder.

The binder is not limited thereto, and any binder used in the relevant technical field may be used, and the amount of the binder may also be appropriately adjusted.

The conductive material is used to provide conductivity to the electrode, and may include, for example, a carbon-based material such as natural graphite, artificial graphite, carbon black, acetylene black, ketjen black, a carbon fiber, and a carbon nanotube; a metal-based material in the form of metal powder or metal fibers, including copper, nickel, aluminum, and silver; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

If the negative electrode layer is a negative electrode catalyst layer, it means that the negative electrode is a deposition-type negative electrode. The deposition-type negative electrode means a negative electrode that does not include a negative electrode active material if the battery is assembled, but in which lithium metal or the like is precipitated if the battery is charged and this acts as a negative electrode active material. To explain this in more detail, if charging an all-solid-state battery, lithium ions are deintercalated from the positive electrode active material, pass through the solid electrolyte, and move toward the negative electrode, and are deposited on the negative electrode current collector, resulting in the formation of a lithium deposition layer between the current collector and the negative electrode layer. A negative electrode having such a lithium deposition layer is called a deposition-type negative electrode.

That is, a lithium deposition layer may be formed between the negative electrode current collector and the negative electrode layer.

The charging process may be a formation process performed 1 to 3 times at 0.05 C to 1 C at about 25 °C to 50 °C.

A thickness of the lithium deposition layer may be 10 µm to 50 µm. For example, the thickness of the lithium deposition layer may be greater than or equal to 10 µm, greater than or equal to 20 µm, greater than or equal to 30 µm, or greater than or equal to 40 µm and less than or equal to 50 µm, less than or equal to 40 µm, less than or equal to 30 µm, or less than or equal to 20 µm. If the thickness of the lithium deposition layer is within the above range, there may be an advantage in that lithium may be reversibly precipitated during charge/discharge, thereby further improving the cycle-life.

The negative electrode catalyst layer may include a metal, a carbon material, or a combination thereof that acts as a catalyst. In the negative electrode catalyst layer, for example, a metal may be supported on a carbon material, or a metal and a carbon material may be present in a mixture. In an embodiment, the negative electrode catalyst layer may include a metal and a carbon material.

The carbon material may be, for example, crystalline carbon, amorphous carbon, or a combination thereof, and may be amorphous carbon. The crystalline carbon may be, for example, natural graphite, artificial graphite, mesophase carbon microbeads, or a combination thereof. The amorphous carbon may be, for example, carbon black, acetylene black, denka black, ketjen black, furnace black, activated carbon, graphene, or a combination thereof. An example of the carbon black is Super P (Timcal). The amorphous carbon is not limited thereto, and anything as amorphous carbon in the relevant field is of course possible.

The amorphous carbon may be a single particle, may have the form of a secondary particle in which a plurality of primary particles are aggregated, or may be a combination thereof.

The particle size of the above single particle may be from 10 nm to 60 mm. In addition, the particle size of the primary particle may be 20 nm to 100 nm, and the particle size of the secondary particle may be 1 µm to 20 µm.

In an embodiment, the particle size of the primary particles may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm, and less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm.

In an embodiment, the particle size of the secondary particles may be greater than or equal to 1 µm, greater than or equal to 3 µm, greater than or equal to 5 µm, greater than or equal to 7 µm, greater than or equal to 10 µm, or greater than or equal to 15 µm, and less than or equal to 20 µm, less than or equal to 15 µm, less than or equal to 10 µm, less than or equal to 7 µm, less than or equal to 5 µm, or less than or equal to 3 µm.

The shape of the primary particles may be spherical, elliptical, plate-shaped, and combinations thereof and in an embodiment, the shape of the primary particles may be spherical, elliptical, and a combination thereof.

The metal particles may be any one selected from Ag, Zn, Al, Sn, Mg, Ge, Cu, In, Ni, Bi, Au, Si, Pt, Pd, and a combination thereof and in an embodiment may be Ag. If the negative electrode layer includes the metal particles, the electrical conductivity of the negative electrode may be improved.

The metal particles may have a size of 5 nm to 800 nm. The size of the metal particles may be greater than or equal to 5 nm, greater than or equal to 50 nm, greater than or equal to 100 nm, greater than or equal to 150 nm, greater than or equal to 200 nm, greater than or equal to 250 nm, greater than or equal to 300 nm, greater than or equal to 350 nm, greater than or equal to 400 nm, greater than or equal to 450 nm, greater than or equal to 500 nm, greater than or equal to 550 nm, greater than or equal to 600 nm, greater than or equal to 650 nm, greater than or equal to 700 nm, or greater than or equal to 750 nm. In addition, the size of the metal particles may be less than or equal to 800 nm, less than or equal to 750 nm, less than or equal to 700 nm, less than or equal to 650 nm, less than or equal to 600 nm, less than or equal to 550 nm, less than or equal to 500 nm, less than or equal to 450 nm, less than or equal to 400 nm, less than or equal to 350 nm, or less than or equal to 300 nm and less than or equal to 250 nm, less than or equal to 200 nm, less than or equal to 150 nm, less than or equal to 100 nm, or less than or equal to 50 nm. If the size of the metal particles is within the above range, the battery characteristics (e.g., cycle-life characteristics) of the all-solid-state battery may be improved.

If the negative electrode catalyst layer includes a carbon-based material and metal particles, a mixing ratio of the carbon-based material and the metal particles may be a weight ratio of 1:1 to 99:1. For example, the weight of the carbon-based material to the metal particles may be greater than or equal to 1, greater than or equal to 2, greater than or equal to 3, greater than or equal to 4, greater than or equal to 5, greater than or equal to 10, greater than or equal to 15, greater than or equal to 20, greater than or equal to 25, greater than or equal to 30, greater than or equal to 35, greater than or equal to 40, greater than or equal to 45, greater than or equal to 50, greater than or equal to 55, greater than or equal to 60, greater than or equal to 65, greater than or equal to 70, greater than or equal to 75, greater than or equal to 80, greater than or equal to 85, greater than or equal to 90, or greater than or equal to 95, and less than or equal to 99, less than or equal to 95, less than or equal to 90, less than or equal to 85, less than or equal to 80, less than or equal to 75, less than or equal to 70, less than or equal to 65, less than or equal to 60, less than or equal to 55, less than or equal to 50, less than or equal to 45, less than or equal to 40, less than or equal to 35, less than or equal to 30, less than or equal to 25, less than or equal to 20, less than or equal to 15, less than or equal to 10, less than or equal to 5, less than or equal to 4, less than or equal to 3, or less than or equal to 2. For example, the weight ratio of the carbon-based material to the metal particles may be 1:1 to 5:1, 1:1 to 10:1, 1:1 to 20:1, 1:1 to 30:1, 1:1 to 40:1, 1:1 to 50:1, 1:1 to 60:1, 1:1 to 70:1, 1:1 to 80:1, or 1:1 to 90:1. If the carbon-based material and the metal particles are included in the above weight ratio, the electrical conductivity of the negative electrode may be further improved.

Additionally, the negative electrode catalyst layer may further include a binder, a conductive material, and/or a solid electrolyte.

The binder and the conductive material are the same as those described in the negative electrode active material layer.

The above solid electrolyte may be an inorganic solid electrolyte such as a sulfide-based solid electrolyte, an oxide-based solid electrolyte, or a solid polymer electrolyte.

In an embodiment, the solid electrolyte may be a sulfide-based solid electrolyte having excellent ionic conductivity. The sulfide-based solid electrolyte may be, for example, Li₂S-P₂S₅, Li₂S-P₂S₅--LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S_{S}-ZₘSₙ (wherein m and n are each integer and Z is Ge, Zn, or Ga), Li₂S-GeS₂, Li₂S-SiS₂-Li₃PO₄, Li₂S-SiS₂-LiₚMO_{q} (wherein p and q are each integer and M is P, Si, Ge, B, Al, Ga, or In).

The sulfide-based solid electrolyte may be obtained by, for example, mixing Li₂S and P₂S₅ in a molar ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. The mixing method may include mechanical milling, quenching, or solution method. Additionally, additional heat treatment may be performed after mixing. If additional heat treatment is performed, the crystals of the solid electrolyte may become more robust.

For example, the solid electrolyte may be an argyrodite-type sulfide-based solid electrolyte. The sulfide-based solid electrolyte may be, for example, LiₐM_{b}P_{c}S_{d}Aₑ (wherein a, b, c, d and e are all 0 or more and 12 or less, M is Ge, Sn, Si, or a combination thereof, A is F, Cl, Br, or I), and specifically, Li₃PS₄, Li₇P₃S₁₁, Li₆PS₅Cl, Li₆PS₅Br, Li₆PS₅I, etc. The sulfide-based solid electrolyte has high ionic conductivity close to the ionic conductivity of general liquid electrolytes at room temperature, which is in the range of ⁻⁴S/cm to 10⁻² S/cm, and thus may form a close bond between the active material and the solid electrolyte without causing a decrease in ionic conductivity, and further, may form a close interface between the negative electrode layer and the solid electrolyte layer. An all-solid-state battery including the same may have improved battery performances such as rate capability, coulombic efficiency, and cycle-life characteristics.

The sulfide-based solid electrolyte may be amorphous or crystalline, or may be a mixture of the two.

The solid electrolyte may be an oxide-based inorganic solid electrolyte other than the sulfide-based material. The oxide-based inorganic solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂(0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M= Te, Nb, or Zr; and x is an integer of 1 to 10), or a mixture thereof.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. The solid electrolyte may effectively penetrate between the positive electrode active materials, and have excellent contact with the positive electrode active materials and connectivity between the solid electrolyte particles.

The negative electrode catalyst layer may further include an additive such as a filler, a dispersant, and an ion conductive material. In addition, known materials generally used in all-solid-state batteries may be used as a filler, a dispersant, an ion conductive material, etc. that may be included in the negative electrode catalyst layer.

A thickness of the above negative electrode catalyst layer 405 may be, for example, 100 nm to 20 µm, or 500 nm to 10 µm, or 1 µm to 5 µm.

The deposition-type negative electrode may further include a thin film, for example, on the surface of the current collector, that is, between the current collector and the negative electrode catalyst layer. The thin film may include an element capable of forming an alloy with lithium. Elements capable of forming alloys with lithium may include, for example, gold, silver, zinc, tin, indium, silicon, aluminum, bismuth, etc., and may be composed of one type of these or may be composed of an alloy of several types. The thin film may further planarize the precipitation pattern of the lithium metal layer 404 and further improve the characteristics of the all-solid-state battery. The thin film may be formed by a method such as vacuum deposition, sputtering, or plating. The thickness of the above thin film may be, for example, 1 nm to 500 nm.

In the deposition-type negative electrode, the current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The solid electrolyte included in the solid electrolyte layer may be a sulfide-based solid electrolyte, and may be, for example, an argyrodite-type sulfide-based solid electrolyte. The sulfide-based solid electrolyte is suitable because they have superior ionic conductivity compared to other solid electrolytes such as oxide-based solid electrolytes, and may exhibit excellent cycle-life characteristics over a wider operating range.

The sulfide-based solid electrolyte may be, for example, LiₐM_{b}P_{c}S_{d}Aₑ (wherein a, b, c, d and e are all 0 or more and 12 or less, M is Ge, Sn, Si, or a combination thereof, and A is F, Cl, Br, or I) and specifically, Li₃PS₄, Li₇P₃S₁₁, Li₆PS₅Cl, Li₆PS₅Br, Li₆PS₅I, etc.

The sulfide-based solid electrolyte may be amorphous, crystalline, or a mixed state thereof.

Of course, a commercially available solid electrolyte may be used as the sulfide-based solid electrolyte.

The solid electrolyte layer may further include a binder. At this time, the binder may be a styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

In an embodiment, a cushioning material may be additionally included to buffer thickness changes that occur if the all-solid-state battery is charged and discharged. The cushioning material may be present between the negative electrode and the case, and in the case of a battery in which one or more electrode assemblies are stacked, it may be present between different electrode assemblies.

The cushioning material may include a material that has an elastic recovery rate of 50% or more and has an insulating function, and specifically includes a silicone rubber, an acrylic rubber, a fluorine-based rubber, nylon, a synthetic rubber, or a combination thereof. The cushioning material may be present in the form of a polymer sheet.

An all-solid-state battery according to an embodiment may be manufactured by placing a negative electrode, a positive electrode, and a solid electrolyte layer between the negative electrode and the positive electrode, preparing a stack, and pressing the stack.

The pressing process may be performed in the range of 25 °C to 90 °C. Additionally, the pressing process may be performed by pressing at a pressure of less than or equal to 550 MPa, for example, less than or equal to 500 MPa, for example 5 MPa to 500 MPa. The pressing time may vary depending on temperature and pressure, and may be, for example, less than 30 minutes. The pressing process may be performed using any process that may apply pressure to the stack.

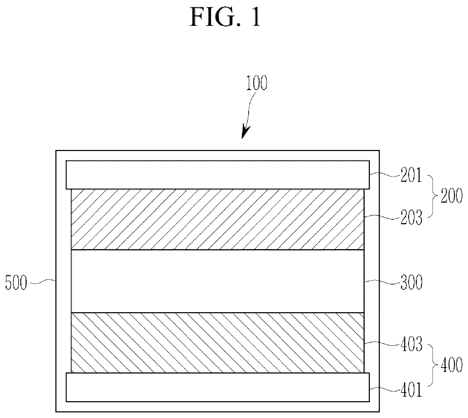

FIG. 1 is a cross-sectional view of an all-solid-state battery according to an embodiment. Referring to FIG. 1, the all-solid-state battery 100 includes an electrode assembly in which a negative electrode 400 including a negative electrode current collector 401 and a negative electrode active material layer 403, a solid electrolyte layer 300, and a positive electrode 200 including a positive electrode active material layer 203 and the positive electrode current collector 201 are stacked and a case such as a pouch housing the electrode assembly. The all-solid-state battery 100 may further include an elastic layer 500 on the outside of at least one of the positive electrode 200 and the negative electrode 400. Although FIG. 1 shows one electrode assembly including the negative electrode 400, the solid electrolyte layer 300, and the positive electrode 200, an all-solid-state battery may also be manufactured by stacking two or more electrode assemblies.

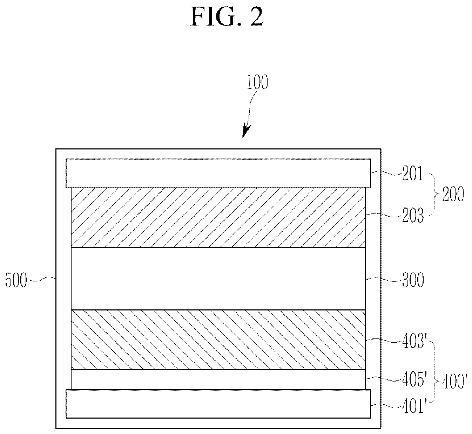

FIG. 2 schematically illustrates the structure of an all-solid-state battery including, for example, a deposition-type negative electrode according to another embodiment. An all-solid-state battery 100 includes a positive electrode 200 including a positive electrode current collector 201 and a positive electrode active material layer 203, a deposition-type negative electrode 400' including a negative electrode current collector 401 and a negative electrode catalyst layer 403, and a solid electrolyte 300 between the positive electrode 200 and the deposition-type negative electrode 400', and a battery case 500 in which these are accommodated.

If charging such an all-solid-state battery, lithium ions are deintercalated from the positive electrode active material and deposited on the negative electrode current collector 401', and as a result, a lithium deposition layer 405' is formed between the current collector 401' and the deposition-type negative electrode 403'.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Manufacturing of Positive Electrode

A succinonitrile plasticizer and LiN(SO₂CF₃)₂) lithium salt were mixed at 60 °C.

The obtained mixture was mixed in a polyvinylidene fluoride binder and an octyl acetate solvent at a temperature of 60 °C and cooled to 20 °C.

The obtained product, LiNi_{0.8}Co_{0.1}Al_{0.1}O₂ positive electrode active material, argyrodite-type solid electrolyte Li₆PS₅Cl, and carbon nanotube conductive material were mixed in an octyl acetate solvent to prepare a positive electrode layer slurry. At this time, a mixing ratio of the positive electrode active material, solid electrolyte, conductive material, plasticizer, and lithium salt in the final positive electrode was 84.46:13.42:0.35:1.13:0.4:0.24 in weight ratio.

The positive electrode layer slurry was coated on an aluminum foil current collector, and a drying and compressing process was performed at 60 °C to manufacture a positive electrode for an all-solid-state battery. In the manufactured positive electrode, the succinonitrile was present in a liquid state, a lithium salt was dissolved in the succinonitrile and was present in a solvated state, a plasticizer amount was 0.4 wt% based on 100 wt% of the total positive electrode layer, and a lithium salt amount was 0.24 wt% based on 100 wt% of the total positive electrode layer.

### (2) Manufacturing of Negative Electrode

A polyvinylidene fluoride binder, Ag nanoparticles (D50: 60 nm), and carbon black were mixed. The carbon black was a mixture of single particles having a particle size of 38 nm and secondary particles, and the secondary particles were agglomerated from primary particles having a particle size of 76 nm and secondary particles having a particle size of 275 nm. A mixing ratio of the above binder, the Ag nanoparticles, and the carbon black was 11:40:120 in weight ratio.

The mixture was stirred with a Thinky mixer to adjust the viscosity to an appropriate level. After adjusting the viscosity, 2 mm zirconia balls were added and stirred again with a sink mixer to prepare a slurry. The stirred slurry was coated on a stainless steel foil current collector and then vacuum-dried at 100 °C to manufacture a negative electrode including a 5 µm-thick negative electrode catalyst layer and a 10 µm-thick current collector. In the negative electrode catalyst layer, the amount of the binder was 9 wt% based on 100 wt% of the total negative electrode active material, and the thickness of the negative electrode catalyst layer was 5 µm.

### (3) Manufacturing of Solid Electrolyte Layer

An isobutyryl isobutyrate binder solution (a solid content: 50 wt%) prepared by adding an acrylate-based polymer of butyl acrylate, was added to an argyrodite-type solid electrolyte of Li₆PS₅Cl, and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 5 µm-thick solid electrolyte layer.

### (3) Manufacturing of All-solid-state Battery Cell

The manufactured negative electrode, solid electrolyte, and positive electrode were sequentially stacked and a pressure of 10 MPa was applied to fabricate an all-solid-state battery cell. In the fabricated battery cell, the thickness of the positive electrode layer (excluding the current collector) was 100 µm, the thickness of the negative electrode catalyst layer (excluding the current collector) was 7 µm, and the thickness of the solid electrolyte layer was 60 µm.

### (Examples 2 to 4 and Comparative Examples 1 to 3)

The same procedure as in Example 1 was followed, except that the obtained product, LiNi_{0.8}Co_{0.1}Al_{0.1}O₂ positive electrode active material, argyrodite-type solid electrolyte Li₆PS₅Cl, and carbon nanotube conductive material were mixed in an octyl acetate solvent so that the mixing ratio of the positive electrode active material, solid electrolyte, conductive material, plasticizer, and lithium salt in the final positive electrode was the weight ratio shown in Table 1. In the manufactured positive electrode, the plasticizer amount and lithium salt amount are shown in Table 1.

All-solid-state battery cells were manufactured in the same manner as in Example 1, except that he manufactured positive electrode was used.

**(Table 1)**

| | Weight ratio at the final positive electrode (weight ratio) | | | | | | Type of plasticizer | Amount of plasticizer (wt%) | Amount of lithium salt (wt%) |
|---|---|---|---|---|---|---|---|---|---|
| | Positive electrode active material | Solid electrolyte | Conductive material | Binder | Plasticizer | Lithium salt | | | |
| Example 1 | 84.46 | 13.42 | 0.35 | 1.13 | 0.4 | 0.24 | Succinonitrile | 0.4 | 0.24 |
| Example 2 | 84.69 | 13.46 | 0.35 | 1.14 | 0.2 | 0.17 | Succinonitrile | 0.2 | 0.17 |
| Comparative Example 1 | 84.8 | 13.48 | 0.35 | 1.14 | 0 | 0.24 | - | 0 | 0.24 |
| Comparative Example 2 | 84.66 | 13.46 | 0.35 | 1.14 | 0.4 | 0 | Succinonitrile | 0.4 | 0 |
| Comparative Example 3 | 85 | 13.51 | 0.35 | 1.14 | 0 | 0 | - | 0 | 0 |

### Experimental Example 1) Evaluation of Ionic Conductivity and Electronic Conductivity

The solid electrolyte layers according to Examples 1 and 2 and Comparative Examples 1 to 3 were respectively punched into a 10 pi disk, and a torque of 10 N · m was applied thereto, preparing samples.

Ionic and electronic conductivity were obtained using the resistance values measured by the EIS (electrochemical impedance spectroscopy) method for the manufactured samples. EIS measurements were performed under conditions of amplitude of 50 mV, frequency of 500 kHz to 50 mHz, and 45 °C.

**(Table 2)**

| | Ionic conductivity [mS/cm] | Electronic conductivity [mS/cm] |
|---|---|---|
| Example 1 | 0.76 | 1.27 |
| Example 2 | 0.64 | 1.32 |
| Comparative Example 1 | 0.15 | 1.25 |
| Comparative Example 2 | 0.19 | 1.16 |
| Comparative Example 3 | 0.12 | 1.30 |

As shown in Table 2, the all-solid-state battery cells of Examples 1 and 2 exhibit electronic conductivity values similar to those of Comparative Examples 1 to 3, while exhibiting very excellent ionic conductivity values. While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A positive electrode for an all-solid-state battery, comprising
a positive electrode layer including a positive electrode active material, a sulfide-based solid electrolyte, a plasticizer that is solid at room temperature and liquid at 60 °C or higher, and a lithium salt; and
a current collector supporting the positive electrode layer.

2. The positive electrode for an all-solid-state battery as claimed in claim 1, wherein the lithium salt is ionized and is present inside the plasticizer.

3. The positive electrode for an all-solid-state battery as claimed in claim 1, wherein the plasticizer is succinonitrile, ethylene carbonate, cyclic phosphate, polycaprolactone, polyethylene glycol (or polyethylene oxide, polytetrahydrofuran (or poly(tetramethylene ether glycol)), or a combination thereof.

4. The positive electrode for an all-solid-state battery as claimed in claim 1, wherein an amount of the plasticizer is 0.05 wt% to 5 wt% based on 100 wt% of the total positive electrode layer.

5. The positive electrode for an all-solid-state battery as claimed in claim 1, wherein the lithium salt is lithium bis(trifluoro methanesulfonyl)imide (LiTFSI, LiN(SO₂CF₃)₂), LiCl, LiBr, LiClO₄, LiBF₄, LiB₁₀Cl₁₀, LiFP₆, LiAsF₆, LiSbF₆, LiAlCl4, LiSCN, LiN(CN)₂, Li(CF₃SO₂)₃C, LiC₄F₉SO₃, LiN(SO₂CF₂CF₃)₂, LiF, Lil, LiB(C₂O₄)₂, LiBF₃(C₂F₅), lithium bis(oxalato) borate (LiBOB), lithium oxalyldifluoroborate (LiODFB), lithium difluoro(oxalato)borate (LiDFOB), lithium bis(fluorosulfonyl)imide (LiFSI, LiN(SO₂F)₂), LiCF₃SO₃, or a mixture thereof.

6. The positive electrode for an all-solid-state battery as claimed in claim 1, wherein an amount of the lithium salt is 0.01 wt% to 5 wt% based on 100 wt% of the total positive electrode layer.

7. The positive electrode for an all-solid-state battery as claimed in claim 1, wherein the sulfide-based solid electrolyte is an argyrodite-type sulfide-based solid electrolyte.

8. An all-solid-state battery, comprising
the positive electrode as claimed in any one of claim 1 to claim 7;
a negative electrode; and
a solid electrolyte layer between the positive electrode and the negative electrode.

9. The all-solid-state battery as claimed in claim 8, wherein the negative electrode includes a current collector and a negative electrode active material layer or a negative electrode catalyst layer on the current collector.

10. The all-solid-state battery as claimed in claim 8, wherein the negative electrode includes a current collector and a lithium metal layer on the current collector.

11. The all-solid-state battery as claimed in claim 9, wherein the negative electrode catalyst layer includes amorphous carbon and a metal.

12. The all-solid-state battery as claimed in claim 9, wherein the negative electrode includes a current collector and a negative electrode catalyst layer on the current collector, and further including a lithium deposition layer between the current collector and the negative electrode catalyst layer during initial charging.
